(19) Europäisches Patentamt
European Patent Office
Office européen des brevets

(11) **EP 4 588 653 A1**

(12) **EUROPEAN PATENT APPLICATION**
published in accordance with Art. 153(4) EPC

(43) Date of publication:
**23.07.2025 Bulletin 2025/30**

(21) Application number: **23865453.7**

(22) Date of filing: **11.09.2023**

(51) International Patent Classification (IPC):
**B32B 7/023** (2019.01)   **A01G 9/14** (2006.01)
**B32B 7/022** (2019.01)   **B32B 27/00** (2006.01)
**D03D 15/283** (2021.01)   **D03D 15/292** (2021.01)
**D03D 15/46** (2021.01)   **D04B 1/16** (2006.01)
**D04B 21/16** (2006.01)   **G02B 5/20** (2006.01)
**G02B 5/22** (2006.01)   **G02B 5/28** (2006.01)

(52) Cooperative Patent Classification (CPC):
**A01G 9/14; B32B 7/022; B32B 7/023; B32B 27/00;
D03D 15/283; D03D 15/292; D03D 15/46;
D04B 1/16; D04B 21/16; G02B 5/20; G02B 5/22;
G02B 5/28;** Y02A 40/25

(86) International application number:
**PCT/JP2023/032991**

(87) International publication number:
**WO 2024/058100 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2022   JP 2022145929
27.03.2023   JP 2023049735**

(71) Applicant: **Toyobo Co., Ltd.
Kita-ku
Osaka-shi, Osaka 530-0001 (JP)**

(72) Inventors:
• **SAGO,Tomoko
Inuyama-shi, Aichi 484-8508 (JP)**
• **OKUMURA,Hisao
Tokyo 104-8345 (JP)**

(74) Representative: **Vossius & Partner
Patentanwälte Rechtsanwälte mbB
Siebertstrasse 3
81675 München (DE)**

(54) **LAMINATED FILM, WOVEN/KNITTED FABRIC, AND FILM FOR PROTECTED HORTICULTURE**

(57)     An object of the present invention is to provide a laminated film, a woven/knitted fabric, a film for protected horticulture, and the like which are excellent in heat shielding properties without blocking the growth of plants and are excellent in handling properties such as fitting and folding properties of the film. A laminated film for an agricultural house utilizing sunlight, the laminated film comprising: a multilayer laminated film in which at least two kinds of resin layers having different refractive indexes are alternately laminated in a thickness direction, and has the following optical characteristics: at an incident angle of 0°, an average transmittance of 70% or more at a wavelength of 430 nm or more and 680 nm or less and an average reflectance of less than 80% at a wavelength of 800 nm or more and 1100 nm or less; and a stiffness of the multilayer laminated film is less than 50.0 mN/cm.

FIG. 2

**Description**

TECHNICAL FIELD

In the first aspect of the present invention, the present invention relates to a laminated film, a woven/knitted fabric, a film for protected horticulture, and the like which are excellent in heat shielding properties without blocking the growth of plants and are excellent in handling properties such as fitting and folding of a film.

In the second aspect of the present invention, the present invention relates to a laminated film, a woven/knitted fabric, a film for protected horticulture, and the like which are excellent in heat shielding properties without blocking the growth of plants.

BACKGROUND ART

A film having far-infrared ray reflection performance and visible region transmission performance has been proposed so far as a film for agricultural house (see, for example, Patent Documents 1 and 2). However, the film is imparted with reflection performance by a metal-containing layer, and has low visible region transmittance. In addition, application of an ultraviolet-cutting layer has also been proposed, but the ultraviolet-cutting layer does not have sufficient performance.

There has also been proposed an agricultural film that selectively cuts a near-infrared (NIR) wavelength region where sunlight energy is high (See, for example, Patent Document 3). However, even in the above proposal, further improvement of visible light necessary for photosynthesis is required.

PRIOR ART DOCUMENTS

PATENT DOCUMENTS

    Patent Document 1: JP-B-5464567
    Patent Document 2: JP-A-2012-206430
    Patent Document 3: JP-B-6630187

SUMMARY OF THE INVENTION

PROBLEMS TO BE SOLVED BY THE INVENTION

In addition to the above performance, in the field of films for agricultural houses and the like, for example, the film may be used in an openable/closable manner, and there has been no film that is excellent in folding of the film or fitting at the time of opening and closing.

In the first aspect of the present invention, in view of the above circumstances, an object of the present invention is to provide a laminated film, a woven/knitted fabric, a film for protected horticulture, and the like which are excellent in heat shielding properties without blocking the growth of plants and are excellent in handling properties such as fitting and folding properties of the film.

In the second aspect of the present invention, in view of the above circumstances, an object of the present invention is to provide a laminated film, a woven/knitted fabric, a film for protected horticulture, and the like which are excellent in heat shielding properties without blocking the growth of plants.

MEANS FOR SOLVING THE PROBLEMS

The present inventors have found that the above problems can be solved by using a predetermined laminated film, and have completed the present invention.

<First aspect of invention>

That is, the present invention provides the following laminated film.
    [1] A laminated film for an agricultural house utilizing sunlight, the laminated film including:
    the laminated film includes a multilayer laminated film in which at least two kinds of resin layers having different refractive indexes are alternately laminated in a thickness direction, and has the following optical characteristics:

at an incident angle of 0°, an average transmittance of 70% or more at a wavelength of 430 nm or more and 680 nm or less and an average reflectance of less than 80% at a wavelength of 800 nm or more and 1100 nm or less; and a stiffness of the multilayer laminated film is less than 50.0 mN/cm.

[2] The laminated film according to [1], wherein
the laminated film has the following optical characteristics:
at an incident angle of 30°, an average reflectance of 70% or more at a wavelength of 700 nm or more and 900 nm or less.
[3] The laminated film according to [1] or [2], wherein
the laminated film has the following optical characteristics:
at an incident angle of 30°, an average transmittance at a wavelength of 450 ± 20 nm is 80% or more, an average transmittance at a wavelength of 660 ± 20 nm is 70% or more, and an average reflectance at a wavelength of 700 nm or more and 900 nm or less is 70% or more.
[4] The laminated film according to any one of [1] to [3], wherein
the laminated film has the following optical characteristics:
at an incident angle of 0°, an average transmittance at a wavelength of 450 ± 20 nm is 80% or more, an average transmittance at a wavelength of 660 ± 20 nm is 70% or more, and an average reflectance at a wavelength of 700 nm or more and 900 nm or less is 70% or more.
[5] The laminated film according to any one of [1] to [4], wherein a ratio of the optical thickness of the laminated film is 0.60 or more and less than 1.0.
[6] The laminated film according to any one of [1] to [5], wherein the laminated film includes an ultraviolet absorbing layer on at least one surface.
In addition, the present invention provides the following woven/knitted fabric.
[7] A woven/knitted fabric including a thin belt-shaped tape cut from the laminated film according to any one of [1] to [6].
[8] A woven/knitted fabric obtained by weaving and knitting a thin belt-shaped tape cut from the laminated film according to any one of [1] to [6] as a warp yarn or a weft yarn and a filament yarn or a spun yarn as a warp yarn or a weft yarn.
In addition, the present invention provides the following film for protected horticulture.
[9] A film for protected horticulture including the laminated film according to any one of [1] to [6].

<Second aspect of invention>

That is, the present invention provides the following laminated film.
[1] A laminated film for an agricultural house utilizing sunlight, the laminated film including:
the laminated film includes a multilayer laminated film in which at least two kinds of resin layers having different refractive indexes are alternately laminated in a thickness direction, and has the following optical characteristics:
at an incident angle of 0°, an average transmittance of 80% or more at a wavelength of 430 nm or more and 680 nm or less and an average reflectance of less than 70% at a wavelength of 800 nm or more and 1100 nm or less.
[2] The laminated film according to [1], wherein
the laminated film has the following optical characteristics:
at an incident angle of 30°, an average transmittance at a wavelength of 450 ± 20 nm is 80% or more, an average transmittance at a wavelength of 660 ± 20 nm is 70% or more, and an average reflectance at a wavelength of 700 nm or more and 900 nm or less is 70% or more.
[3] The laminated film according to [1] or [2], wherein
the laminated film has the following optical characteristics:
at an incident angle of 0°, an average transmittance at a wavelength of 450 ± 20 nm is 80% or more, an average transmittance at a wavelength of 660 ± 20 nm is 70% or more, and an average reflectance at a wavelength of 700 nm or more and 900 nm or less is 70% or more.
[4] The laminated film according to any one of [1] to [3], wherein the ratio of the optical thickness of the laminated film is 0.60 or more and less than 1.0.
[5] The laminated film according to any one of [1] to [4], wherein the laminated film includes an ultraviolet absorbing layer on at least one surface.
In addition, the present invention provides the following woven/knitted fabric.
[6] A woven/knitted fabric including a thin belt-shaped tape cut from the laminated film according to any one of [1] to [5].

[7] A woven/knitted fabric obtained by weaving and knitting a thin belt-shaped tape cut from the laminated film according to any one of [1] to [5] as a warp yarn or a weft yarn and a filament yarn or a spun yarn as a warp yarn or a weft yarn.

In addition, the present invention provides the following film for protected horticulture.

[8] A film for protected horticulture including the laminated film according to any one of [1] to [5].

EFFECT OF THE INVENTION

The laminated film of the present invention can be a laminated film excellent in heat shielding properties without blocking the growth of plants by having the above configuration.

In addition, since the woven/knitted fabric, the film for protected horticulture, and the like of the present invention use the laminated film, for example, in an agricultural house or the like using the laminated film, it is possible to easily suppress a temperature rise in the house or the like and suitably promote plant growth for a long period of time.

<First aspect of invention>

The laminated film of the present invention having the above configuration can be a laminated film excellent in heat shielding properties without blocking the growth of plants and excellent in handling properties such as fitting and folding properties of the film.

In addition, since the woven/knitted fabric, the film for protected horticulture, and the like of the present invention use the laminated film, for example, in an agricultural house or the like using the laminated film, a temperature rise in the house or the like is easily suppressed, and plant growth is suitably promoted for a long period of time, and handling properties such as fitting and folding of the film can be excellent.

<Second aspect of invention>

The laminated film of the present invention can be a laminated film excellent in heat shielding properties without blocking the growth of plants by having the above configuration.

In addition, since the woven/knitted fabric, the film for protected horticulture, and the like of the present invention use the laminated film, for example, in an agricultural house or the like using the laminated film, it is possible to easily suppress a temperature rise in the house or the like and suitably promote plant growth for a long period of time.

BRIEF DESCRIPTION OF THE DRAWINGS

Fig. 1 is a schematic view of an agricultural house provided with a laminated film of the present invention.
Fig. 2 is a partial front view showing an embodiment of the laminated film of the present invention.
Fig. 3 is a partial front view showing another embodiment of the laminated film of the present invention.
Fig. 4 is a schematic view showing an aspect at the time of measuring loop stiffness in an example of the present invention.

MODE FOR CARRYING OUT THE INVENTION

Hereinafter, a detailed description is made of embodiments of the present invention, but the present invention is not limited to these embodiments.

In the present description, a numerical range represented by "to" means a range including numerical values described before and after "to" as a lower limit value and an upper limit value.

<Laminated film>

<First aspect of invention>

The laminated film of the present invention is a laminated film for an agricultural house utilizing sunlight, the laminated film including:
the laminated film includes a multilayer laminated film in which at least two kinds of resin layers having different refractive indexes are alternately laminated in a thickness direction, and has the following optical characteristics:

at an incident angle of 0°, an average transmittance of 70% or more at a wavelength of 430 nm or more and 680 nm or less and an average reflectance of less than 80% at a wavelength of 800 nm or more and 1100 nm or less; and a stiffness of the multilayer laminated film is less than 50.0 mN/cm.

<Second aspect of invention>

The laminated film of the present invention is a laminated film for an agricultural house utilizing sunlight, the laminated film including:
the laminated film includes a multilayer laminated film in which at least two kinds of resin layers having different refractive indexes are alternately laminated in a thickness direction, and has the following optical characteristics:
at an incident angle of 0°, an average transmittance of 80% or more at a wavelength of 430 nm or more and 680 nm or less and an average reflectance of less than 70% at a wavelength of 800 nm or more and 1100 nm or less.

In the present invention, visible light refers to light having a wavelength of 400 nm or more and 800 nm or less, and heat rays refer to light having a wavelength of 800 nm or more and 1400 nm or less.

[Multilayer laminated film]

The laminated film includes a multilayer laminated film in which at least two kinds of resin layers having different refractive indexes are alternately laminated in the thickness direction.

The multilayer laminated film is, for example, a layer (hereinafter, also referred to as a "multilayer laminated structure") in which 20 or more first resin layers (hereinafter, also referred to as a "first layer") and second resin layers (hereinafter, also referred to as a "second layer") having different refractive indices are alternately laminated in the thickness direction onto the outermost layer.

The multilayer laminated film in the present invention preferably has a laminated structure section in which a total of 51 or more layers of the first layer and the second layer are alternately laminated. The upper limit of the number of laminated layers may be, for example, the number of layers such as 1001 layers, but is preferably 900 layers at most from the viewpoint of productivity. The lower limit of the number of layers is more preferably 100 or more, still more preferably 150 or more. When the number of layers is less than the lower limit, selective reflection due to multiple interference is small, and sufficient near-infrared ray reflection performance may not be obtained.

As the resin for forming the resin layer having the multilayer laminated structure, those known per se can be employed, and examples thereof include polyester, polysulfone, polyamide, polyether, polyketone, polyacryl, polycarbonate, polyacetal, polystyrene, polyamideimide, polyarylate, polyolefin, polyfluoropolymer, polyurethane, polyarylsulfone, polyethersulfone, polyarylene sulfur, polyvinyl chloride, polyetherimide, tetrafluoroethylene, and polyetherketone. These are not limited to homopolymers but may be copolymerized. These may be used alone, or two or more thereof may be mixed for use. In addition, since it is easy to increase the difference in refractive index between resins, at least one of the resin layers is preferably a resin having as a repeating unit a condensed aromatic ring such as a naphthalene ring that is easy to increase the refractive index, which may be present as a copolymerization component.

Among them, as the resin (for example, as the first layer) for use in the resin layer having a high refractive index, because high molecular orientation is easily exhibited by stretching, a thermoplastic resin having crystallinity is preferable, and a thermoplastic resin having a melting point of 200°C or higher is particularly preferable. From such a viewpoint, the specific thermoplastic resin is preferably polyester, more preferably polyethylene naphthalate or polyethylene terephthalate.

A description is made of an example in which polyethylene naphthalate is used as the resin for use in the first layer.

As the polyethylene naphthalate, those known per se can be appropriately used. As the polyethylene naphthalate, for example, polyethylene-2,6-naphthalenedicarboxylate is preferable. In particular, polyethylene-2,6-naphthalenedicarboxylate having a condensed aromatic ring is preferable because the layer has a high refractive index and can be stretched at a high stretching ratio.

The proportion of the ethylene naphthalene dicarboxylate component which is a monomer component in the polyethylene naphthalate is preferably 95 mol% or more and 100 mol% or less, more preferably 96 mol% or more, still more preferably 97 mol% or more, based on the total repeating units composing the polyethylene naphthalate. When the ratio of the ethylene naphthalene dicarboxylate component as a main component is less than the lower limit, the melting point and/or the glass transition point of the polyethylene naphthalate composing the first layer decreases, and it is difficult to obtain each temperature difference of the melting point and/or the glass transition point with the polyethylene terephthalate composing the second layer described later. As a result, it may be difficult to impart a sufficient difference in refractive index to the biaxially stretched laminated polyester film.

Examples of copolymer components other than the main component composing the polyethylene naphthalate may include acid components such as aromatic carboxylic acids such as isophthalic acid, terephthalic acid, orthophthalic acid, naphthalenedicarboxylic acids other than the main naphthalenedicarboxylic acid, and biphenyldicarboxylic acid; aliphatic dicarboxylic acids such as succinic acid, adipic acid, azelaic acid, sebacic acid, and decanedicarboxylic acid; and alicyclic dicarboxylic acids such as cyclohexanedicarboxylic acid, and glycol components such as aliphatic diols such as diethylene glycol, propylene glycol, 1,4-butanediol, 1,5-pentanediol, 1,6-hexanediol, and neopentyl glycol; alicyclic diols such as 1,4-cyclohexanedimethanol, polyethylene glycol, and polytetramethylene glycol, and the like.

Among the copolymer components, at least one selected from the group consisting of isophthalic acid, terephthalic acid, neopentyl glycol, 1,4-cyclohexanedimethanol, and diethylene glycol is preferable. Among these copolymer components, isophthalic acid and terephthalic acid are particularly preferable. These copolymer components may be used alone, or two or more thereof may be used.

The polyethylene naphthalate can be produced by appropriately applying a known method. For example, the polyethylene naphthalate can be produced by a method in which a diol component, a dicarboxylic acid component as main components, and optionally a copolymer component are subjected to an esterification reaction, and then the obtained reaction product is subjected to a polycondensation reaction to form a polyester. Alternatively, the polyethylene naphthalate may be produced by a method in which derivatives of these raw material monomers are subjected to a transesterification reaction, and then the obtained reaction product is subjected to a polycondensation reaction to form a polyester. Furthermore, a method may be employed in which two or more kinds of polyesters are melt-kneaded in an extruder and then subjected to a transesterification reaction (redistribution reaction).

The intrinsic viscosity of the polyethylene naphthalate composing the first layer is preferably 0.40 dl/g or more and 0.80 dl/g or less, and may be, for example, in a range of 0.45 dl/g or more and 0.75 dl/g or less. When the intrinsic viscosity of the polyethylene naphthalate composing the first layer is not within the above range, the difference from the intrinsic viscosity of the polyethylene terephthalate composing the second layer may become larger. As a result, in the case of an alternately laminated structure, the layer structure may be disturbed, or the film formability may be deteriorated although a film can be formed. Two or more kinds of polyesters may be melt-mixed in an extruder and then subjected to transesterification, as long as the intrinsic viscosity of each polyester is within the above range.

The glass transition temperature of the polyethylene naphthalate composing the first layer is preferably higher than the glass transition temperature of the polyethylene terephthalate composing the second layer.

On the other hand, the resin for use in the resin layer having a low refractive index (for example, the second layer) is not particularly limited as long as it can exhibit a sufficient refractive index difference from a resin layer having a higher refractive index, and can maintain necessary adhesion. For example, a resin obtained by copolymerizing a copolymer component capable of reducing the refractive index with the resin used for the resin layer having a high refractive index can also be used. In addition, since it is not necessary to increase the refractive index by stretching or the like, a resin having a melting point sufficiently lower than that of an amorphous resin or a resin of a resin layer having a high refractive index can also be used. For example, an amorphous polyester containing an ethylene terephthalate component or the like can be suitably used. Polylactic acid, an acrylic resin, polycarbonate, and polystyrene can also be used as a resin for use in the resin layer having a low refractive index.

A description is made of an example in which polyethylene terephthalate is used as the resin for use in the second layer.

When the polyethylene terephthalate is used, the transparency and reflectance at the initial stage of the film can be increased by selecting processing conditions during film formation, but the film may be crystallized due to heating during post-processing, leading to deterioration of transparency and reflectance characteristics. By using an amorphous polyester as the polyethylene terephthalate of the second layer, high transparency and reflectance at the initial stage of the film can be maintained even after heating during post-processing.

Examples of the ethylene terephthalate include polyesters containing an ethylene terephthalate component in an amount of 50 mol% or more and 80 mol% or less, based on the total repeating units of the polyethylene terephthalate composing the second layer, and more preferably copolymerized polyethylene terephthalate containing an ethylene terephthalate component in an amount of 55 mol% or more and 75 mol% or less (that is, the copolymerization component is preferably copolymerized in an amount of 20 mol% or more and 50 mol% or less, more preferably 25 mol% or more and 45 mol% or less). The copolymerization amount may be adjusted depending on the type of copolymerization component to be used within the range of the copolymerization amount, and for example, when the copolymerization component of copolymerized PET is isophthalic acid and naphthalenedicarboxylic acid, the copolymerization amount is about 30 mol% or more.

When the copolymerization amount is less than the lower limit, crystallization and orientation are likely to occur during film formation, so that a refractive index difference from the first layer is less likely to occur. As a result, the near-infrared reflecting ability is likely to decrease. In addition, the haze increases due to crystallization during film formation. On the other hand, when the copolymerization amount exceeds the upper limit, heat resistance and film formability during film formation (particularly during extrusion) are likely to be deteriorated, and when the copolymerization component is a component that imparts high refractive index, a refractive index difference from the first layer tends to be small due to an increase in refractive index. When the copolymerization amount is within the above range, a sufficient refractive index difference from the first layer can be secured while good heat resistance and film formability are maintained, and sufficient near infrared ray reflection performance can be imparted.

Examples of the copolymerization component preferably used for the polyethylene terephthalate composing the second layer may include acid components such as aromatic dicarboxylic acids such as isophthalic acid, 2,6-naphthalenedicarboxylic acid, and 2,7-naphthalenedicarboxylic acid, aliphatic dicarboxylic acids such as adipic acid, azelaic acid, sebacic acid, and decanedicarboxylic acid, and alicyclic dicarboxylic acids such as cyclohexanedicarboxylic acid, and glycol components such as aliphatic diols such as butanediol and hexanediol, alicyclic diols such as cyclohexanedimethanol, spiroglycol, and the like. Among them, isophthalic acid, 2,6-naphthalenedicarboxylic acid, cyclohexanedimethanol, and spiroglycol are preferable, and when a copolymerization component other than these is contained, the copolymerization amount thereof is preferably 10 mol% or less. In particular, the copolymerization component of the polyethylene terephthalate is preferably 1,4-cyclohexanedimethanol from the viewpoint of low refractive index and small decrease in molecular weight during extrusion.

The intrinsic viscosity of the polyethylene terephthalate is preferably 0.4 dl/g or more and 1.0 dl/g or less, and may be, for example, 0.45 dl/g or more and 0.95 dl/g or less, or 0.5 dl/g or more and 0.95 dl/g or less. When the intrinsic viscosity of the polyethylene terephthalate composing the second layer is not within the above range, the difference from the intrinsic viscosity of the polyethylene naphthalate composing the first layer may become larger. As a result, in the case of an alternately laminated structure, the layer structure may be disturbed, or the film formability may be deteriorated although a film can be formed.

Two or more kinds of polyesters may be melt-mixed in an extruder and then subjected to transesterification, as long as the intrinsic viscosity of each polyester is within the above range.

The polyethylene terephthalate can be produced by appropriately applying a known method. For example, polyethylene terephthalate can be produced by a method in which an acid component, a glycol component, and a copolymerization component as main components are subjected to an esterification reaction, and then the obtained reaction product is subjected to a polycondensation reaction to form a polyester. Alternatively, the polyethylene naphthalate may be produced by a method in which derivatives of these raw material monomers are subjected to a transesterification reaction, and then the obtained reaction product is subjected to a polycondensation reaction to form a polyester. Furthermore, a method may be employed in which two or more kinds of polyesters are melt-kneaded in an extruder and then subjected to a transesterification reaction (redistribution reaction).

In addition, the first layer and the second layer may contain a small amount of additives as long as the object of the present invention is not impaired, and examples of the additives include additives such as lubricants such as inert particles, coloring agents such as pigments and dyes, stabilizers, flame retardants, and foaming agents.

In addition, each layer thickness of the first layer and the second layer is preferably a thickness with which an effect of selectively reflecting near-infrared light by optical interference between layers can be obtained.

Here, the reflection wavelength of the multilayer laminated film corresponds to twice the sum of the optical thicknesses of the first layer and the second layer adjacent to each other. The optical thickness is represented by a product of the refractive index and the thickness of each layer, and it is preferable to adjust the thickness of each layer according to the refractive index of the resin to be used and the target reflection wavelength.

In the present invention, the optical thickness and the ratio thereof are determined from the following formula.

$$\text{Ratio of optical thickness} = (n1 \times d1)/(n2 \times d2)$$

n1  Refractive index of first layer
n2  Refractive index of second layer
d1  Thickness of first layer
d2  Thickness of second layer

In addition, as described in "Reflectivity of Iridescent Co extruded Multilayered Plastic Films" by Radford et al., Polymer Engineering and Science, Vol. 13, No. 3, May 1973, in a multilayer film utilizing multilayer interference with 1/4 wavelength, even when a main reflection peak does not occur in a visible light region, occurrence of a high order reflection peak in a visible light region may affect reduction of photosynthesis. Therefore, it is preferable to set an appropriate optical thickness for excluding high order reflection.

In the multilayer interference film, when the ratio of the optical thickness (the ratio of the optical thickness of the second layer to the optical thickness of the first layer of the main reflection peak) is 1.0, the second order (1/2 wavelength of the main reflection peak) and the fourth order (1/4 wavelength of the main reflection peak) of the high-order peaks can be removed. Therefore, in the laminated film capable of infrared ray shielding according to the present invention, it is preferable to adjust the thickness of the layer of the second layer to be close to 1.0 with respect to the thickness of the layer of the adjacent first layer in consideration of the refractive index of the layer of the multilayer laminated film because particularly the influence of the appearance of the secondary reflection peak in the visible light region on the decrease in photosynthesis can be prevented.

For this reason, the ratio of the optical thickness of the multilayer laminated film is preferably 0.60 or more and less than 1.0. The lower limit value of the ratio of the optical thickness of the multilayer laminated film may be, for example, 0.65 or more, 0.70 or more, 0.75 or more, 0.77 or more, 0.79 or more, or 0.8 or more, and the upper limit value may be 0.99 or less, 0.98 or less, 0.97 or less, 0.95 or less, 0.93 or less, 0.91 or less, or 0.90 or less according to the purpose of use or application. Changing the ratio of the optical thicknesses from 1.0 is not usually performed and is not first considered, especially for multilayer laminated films. However, in the present invention, by adopting the above configuration, it is possible to effectively prevent the influence of the secondary reflection peak in the coherent multilayer laminated film on the decrease in photosynthesis due to appearance in the visible light region.

As an example in consideration of an appropriate optical thickness for excluding higher order reflection, the thickness of each layer in the case of primarily reflecting a wavelength of 700 nm or more and 900 nm or less using polyethylene-2,6-naphthalate (hereinafter referred to as "PEN") for the first layer and copolymerized polyethylene terephthalate copolymerized with 30 mol% of cyclohexanedimethanol (hereinafter referred to as "CHDM30PET") for the second layer will be described. Depending on film formation conditions of the film, in general, the refractive index of PEN in the stretching direction is 1.74 or more and 1.78 or less, and the refractive index of CHDM30PET is about 1.55 to 1.58, and therefore, the thickness of each layer of the first layer is preferably in the range of 0.09 μm or more and 0.18 μm or less, and the thickness of each layer of the second layer is preferably in the range of 0.09 μm or more and 0.23 μm or less, and particularly preferably in the range of 0.10 μm or more and 0.20 μm or less. When each of the first layer and the second layer has a thickness in this range, light in the near-infrared region can be selectively reflected and shielded.

[Protective functional layer]

The laminated film may include, for example, a protective layer in the outermost layer of at least one of the multilayer laminated structures.

The protective layer preferably contains the resin for use in the first layer.

The protective layer is preferably a layer mainly composed of polyethylene naphthalate. With regard to polyethylene naphthalate and the like, the description in the column of the first layer can be appropriately used in the same manner.

In the present invention, "mainly composed of polyethylene naphthalate" means that polyethylene naphthalate is contained in an amount of 50 mass% or more with respect to the total amount of the components in the protective layer, and for example, the amount may be 80 mass% or more or 90 mass% or more.

The thickness of the protective layer is 10 μm or less, but may be, for example, 1 μm or more and 9 μm or less, 2 μm or more and 8 μm or less, 3 μm or more and 7 μm or less, or 4 μm or more and 5 μm or less.

When a plurality of protective layers are provided in the laminated film, for example, when the protective layers are provided on both outermost layers of the multilayer laminated structure, the thickness of protective layer refers to the thickness of each of them.

[Surface functional layer]

The surface functional layer of the present invention is, for example, a layer provided on at least one surface of the laminated film, and is made of a resin composition containing particles and a resin.

The particles may be inorganic particles, organic particles, or organic-inorganic composite particles. Specifically, for example, particles of silica, an acrylic resin, a styrene resin, an acrylic/styrene copolymer resin, silicone, a melamine resin, a benzoguanamine resin, or the like can be used. These may be used alone, or two or more thereof may be mixed for use.

The particles are preferably organic particles, specifically, organic particles in the examples described above, more preferably acrylic resin, styrene resin, or acrylic/styrene copolymer resin, particularly preferably acrylic resin particles from the viewpoint of heat resistance or solvent resistance.

The particles may have an average particle diameter of 4 μm or more and 10 μm or less, for example, 4.5 μm or more and 9.5 μm or less, 5 μm or more and 9 μm or less, 5.5 μm or more and 8.5 μm or less, 6 μm or more and 8 μm or less, 6.5 μm or more and 7.5 μm or less, or 6.7 μm or more and 7 μm or less.

In the present invention, the average particle diameter of the particles is measured by the following method.

First of all, a cross section of the surface functional layer is cut out in parallel with the machine direction by a microtome method, and an extremely thin metal for imparting conductivity is sputtered on a particle surface of the cross section. From an image magnified 10,000 to 30,000 times with a transmission electron microscope (TEM), the circle area-equivalent diameter is obtained, and calculation is performed from the following mathematical formula.

Average particle diameter = sum of circle area-equivalent diameters of measured particles/number of measured particles (at least 100 or more)

Formula:

The content of the particles in the surface functional layer is 0.3 parts by mass or more and 1.5 parts by mass or less with respect to 100 parts by mass of the resin contained in the surface functional layer, and may be, for example, 0.4 parts by mass or more and 1.4 parts by mass or less, 0.5 parts by mass or more and 1.3 parts by mass or less, 0.6 parts by mass or more and 1.2 parts by mass or less, 0.7 parts by mass or more and 1.1 parts by mass or less, 0.8 parts by mass or more and 1 part by mass or less, or 0.85 parts by mass or more and 9 parts by mass or less.

As the particles, spherical particles are preferably used. The spherical particles having a higher sphericity are more preferable, and those having an aspect ratio of 1.3 or less are preferable, and those having an aspect ratio of 1.1 or less are particularly preferable. The particles are preferably colorless and transparent particles. Here, the term "colorless and transparent" means that there is substantially no coloring that lowers the color purity of the three primary colors, and the light transmissivity is excellent.

The ratio of the thickness of the surface functional layer to the average particle diameter of the particles contained in the surface functional layer is 0.5 or more. When the thickness ratio is 0.5 or more, fall off of particles from the surface functional layer can be suppressed. The upper limit value of the thickness ratio is not particularly limited, but is preferably 3 or less, more preferably 2.5 or less, still more preferably 2 or less from the viewpoint of suppressing the material cost.

When the average particle diameter of the particles contained in the surface functional layer is larger than the thickness of the surface functional layer (that is, the above ratio is less than 1), the thickness of the surface functional layer is measured at a position where no particles are present.

The resin composition contains a resin as a binder component. Specific examples of the resin may include an acrylic resin, a polyester resin, a polyolefin resin, a urethane resin, and a fluororesin. These may be used alone, or two or more thereof may be mixed for use.

The resin is a main component (that is, the content is 50 mass% or more) in the resin composition, and is preferably contained in an amount of 70 mass% or more, and may be contained in an amount of 90 mass% or more, or 95 mass% or more with respect to the entire resin composition.

The resin may appropriately contain a known ultraviolet absorber, but preferably contains an ultraviolet absorber having a triazine skeleton.

In the present invention, when the surface functional layer contains the ultraviolet absorber, the surface functional layer may be referred to as an ultraviolet absorbing layer.

As the ultraviolet absorber having a triazine skeleton, a known ultraviolet absorber may be appropriately used as long as the ultraviolet absorber has a triazine skeleton in the molecule.

Examples of the ultraviolet absorber having a triazine skeleton may include 2-(2-hydroxy-4-hexyloxyphenyl)-4,6-diphenyl-s-triazine, 2-(2-hydroxy-4-propoxy-5-methylphenyl)-4,6-bis(2,4-dimethylphenyl)-s-triazine, 2-(2-hydroxy-4-hexyloxyphenyl)-4,6-dibiphenyl-s-triazine, 2,4-diphenyl-6-(2-hydroxy-4-methoxyphenyl)-s-triazine, 2,4-diphenyl-6-(2-hydroxy-4-ethoxyphenyl)-s-triazine, 2,4-diphenyl-6-(2-hydroxy-4-propoxyphenyl)-s-triazine, 2,4-diphenyl-6-(2-hydroxy-4-butoxyphenyl)-s-triazine, 2,4-bis(2-hydroxy-4-octoxyphenyl)-6-(2,4-dimethylphenyl)-s-triazine, 2,4,6-tris(2-hydroxy-4-hexyloxy-3-methylphenyl)-s-triazine, 2,4,6-tris(2-hydroxy-4-octoxyphenyl)-s-triazine, 2-(4-isooctyloxycarbonylethoxyphenyl)-4,6-diphenyl-s-triazine, 2-(4,6-diphenyl-s-triazin-2-yl)-5-(2-(2-ethylhexanoyloxy)ethoxy)phenol, and the like. These may be used alone, or two or more thereof may be mixed for use.

The content of the ultraviolet absorber in the weathering resin layer is preferably 8 parts by mass or more and 45 parts by mass or less with respect to 100 parts by mass of the resin contained in the surface functional layer, and may be, for example, 10 parts by mass or more and 40 parts by mass or less, 12 parts by mass or more and 35 parts by mass or less, 13 parts by mass or more and 30 parts by mass or less, 14 parts by mass or more and 25 parts by mass or less, or 15 parts by mass or more and 20 parts by mass or less.

The thickness of the surface functional layer is adjusted according to the application, and is, for example, in a range of 1 μm or more and 125 μm or less, and may be, for example, 2 μm or more and 100 μm or less, 3 μm or more and 90 μm or less, 5 μm or more and 80 μm or less, or 10 μm or more and 60 μm or less.

The surface functional layer may contain a small amount of additives as long as the object of the present invention is not impaired, and examples of the additives include additives such as lubricants such as inert particles other than the above-described particles, leveling agents for improving film formation quality, coloring agents such as pigments and dyes, stabilizers, flame retardants, and foaming agents.

[Heat-ray reflection layer]

The multilayer laminated film itself has a heat ray reflection function, but a known heat-ray reflection layer may be further provided as necessary.

[Laminated film]

<First aspect of invention>

The laminated film of the present invention includes the multilayer laminated film, and has the following optical characteristics:

at an incident angle of 0°, an average transmittance of 80% or more at a wavelength of 430 nm or more and 680 nm or less and an average reflectance of less than 70% at a wavelength of 800 nm or more and 1100 nm or less, and

a stiffness of the multilayer laminated film is less than 50.0 mN/cm.

In the present invention, the spectral transmittance refers to a value measured with a spectrophotometer, and the spectral transmittance at a wavelength of 300 nm or more and 1800 nm or less was measured at intervals of 2 nm, and the spectral transmittance at each wavelength was measured. Then, the average transmittance in each wavelength range was calculated. The measurement is performed at 25°C in an atmosphere of the air, and the incident angle of the measurement light is set to 0° or 30°.

The laminated film of the present invention is designed to have optical characteristics of an average transmittance of 70% or more at a wavelength of 430 nm or more and 680 nm or less and an average reflectance of less than 80% at a wavelength of 800 nm or more and 1100 nm or less at an incident angle of 0° from the viewpoint of obtaining high total light transmittance in a wavelength range useful for the growth of plants while having a heat ray reflection function.

The average transmittance at a wavelength of 430 nm or more and 680 nm or less at an incident angle of 0° may be, for example, 71% or more, 72% or more, 73% or more, 74% or more, 75% or more, 76% or more, 77% or more, 78% or more, 79% or more, 80% or more, 81% or more, 82% or more, 83% or more, 84% or more, 85% or more, 86% or more, or 87% or more according to the purpose of use or application.

The average reflectance at a wavelength of 800 nm or more and 1100 nm or less at an incident angle of 0° may be, for example, 79% or less, 78% or less, 77% or less, 76% or less, 75% or less, 74% or less, 73% or less, 72% or less, 71% or less, 70% or less, 69% or less, 68% or less, 67% or less, 66% or less, 65% or less, 60% or less, 55% or less, or 50% or less according to the purpose of use or application. Although the solar altitude varies depending on the latitude and the season, it is more effective to design the film surface in consideration of the incident angle of sunlight of 30° in light transmission and the heat shielding effect contributing to photosynthesis when considering the heat shielding material effect particularly in the hot season from the spring to the fall in the hot district to the south of Tokyo in Japan. Therefore, with the above configuration, it is possible to effectively prevent the influence of the secondary reflection peak in the coherent multilayer laminated film on the decrease in photosynthesis due to the appearance in the visible light region.

Further, the laminated film preferably has, for example, the following optical characteristics: at an incident angle of 30°, an average reflectance of 70% or more at a wavelength of 700 nm or more and 900 nm or less.

The average reflectance at a wavelength of 700 nm or more and 900 nm or less at an incident angle of 30° may be, for example, 71% or more, 72% or more, 73% or more, 74% or more, 75% or more, 76% or more, 77% or more, 78% or more, 79% or more, 80% or more, 81% or more, 82% or more, 83% or more, 84% or more, 85% or more, 86% or more, or 87% or more according to the purpose of use or application.

Further, the laminated film preferably has the following optical characteristics: at an incident angle of 30°, an average transmittance at a wavelength of 450 ± 20 nm is 80% or more, an average transmittance at a wavelength of 660 ± 20 nm is 70% or more, and an average reflectance at a wavelength of 700 nm or more and 900 nm or less is 70% or more.

The average transmittance at a wavelength of 450 ± 20 nm at an incident angle of 30° may be, for example, 81% or more, 82% or more, 83% or more, 84% or more, 85% or more, 86% or more, 87% or more, 88% or more, or 89% or more according to the purpose of use or application. With the above configuration, light transmission necessary for photosynthesis of plants can be obtained, which is effective.

The average transmittance at a wavelength of 660 ± 20 nm at an incident angle of 30° may be, for example, 71% or more, 72% or more, 73% or more, 74% or more, 75% or more, 76% or more, 77% or more, 78% or more, 79% or more, 80% or more, or 81% or more according to the purpose of use or application. With the above configuration, light transmission necessary for photosynthesis of plants can be obtained, which is effective.

The average reflectance at a wavelength of 700 nm or more and 900 nm or less at an incident angle of 30° may be, for example, 81% or more, 82% or more, 83% or more, 84% or more, 85% or more, 86% or more, 87% or more, 88% or more, 89% or more, 90% or more, 91% or more, 92% or more, 93% or more, 94% or more, 95% or more, 96% or more, 97% or more, or 98% or more, according to the purpose of use or application. With the above configuration, light transmission necessary for photosynthesis of plants can be obtained, which is effective.

Further, the laminated film preferably has the following optical characteristics: at an incident angle of 0°, an average transmittance at a wavelength of 450 ± 20 nm is 80% or more, an average transmittance at a wavelength of 660 ± 20 nm is 70% or more, and an average reflectance at a wavelength of 700 nm or more and 900 nm or less is 70% or more.

The average transmittance at a wavelength of 450 ± 20 nm at an incident angle of 0° may be, for example, 81% or more, 82% or more, 83% or more, 84% or more, 85% or more, 86% or more, 87% or more, 88% or more, or 89% or more according to the purpose of use or application. With the above configuration, light transmission necessary for photosynthesis of plants can be obtained, which is effective.

The average transmittance at a wavelength of 660 ± 20 nm at an incident angle of 0° may be, for example, 71% or more, 72% or more, 73% or more, 74% or more, 75% or more, 76% or more, 77% or more, 78% or more, 79% or more, 80% or more, 81% or more, 82% or more, 83% or more, 84% or more, 85% or more, or 86% or more according to the purpose of use or application. With the above configuration, light transmission necessary for photosynthesis of plants can be obtained, which is effective.

The average reflectance at a wavelength of 700 nm or more and 900 nm or less at an incident angle of 0° may be, for example, 71% or more, 72% or more, 73% or more, 74% or more, 75% or more, 76% or more, 77% or more, 78% or more, 79% or more, 80% or more, 81% or more, 82% or more, 83% or more, 84% or more, 85% or more, 86% or more, 87% or more, 88% or more, 89% or more, 90% or more, 91% or more, or 92% or more according to the purpose of use or application. The above configuration is effective because a heat shielding effect from sunlight can be obtained. In addition, it is possible to effectively prevent the influence of the appearance of the secondary reflection peak in the visible light region on the decrease in photosynthesis.

The ratio of the optical thickness of the laminated film is preferably 0.60 or more and less than 1.0. The lower limit value of the ratio of the optical thickness of the laminated film may be, for example, 0.65 or more, 0.67 or more, 0.70 or more, 0.75 or more, or 0.8 or more, and the upper limit value may be 0.99 or less, 0.98 or less, 0.97 or less, 0.95 or less, 0.93 or less, 0.91 or less, or 0.90 or less according to the purpose of use or application. With the above configuration, it is possible to effectively prevent the influence of the secondary reflection peak in the coherent multilayer laminated film on the decrease in photosynthesis due to the appearance in the visible light region. The optical thickness is the same as that of the multilayer laminated film. In addition, the larger the value of the optical thickness, the higher the rigidity of the film, and the smaller the value of the optical thickness, the lower the rigidity of the film, and the smaller the value of the loop stiffness. In particular, in the case of use in agricultural house applications and the like, the handling properties can be improved and the film can be easily fitted at the time of opening and closing.

The stiffness of the laminated film is less than 50.0 mN/cm.

The stiffness in the present invention can be measured by loop stiffness measurement as shown in Examples. The loop stiffness refers to the repulsive force of a loop measured in a state where the loop is formed using a film cut into a strip shape having a predetermined dimension and the loop is crushed by a predetermined amount in a radial direction, and is an index representing the rigidity of the film.

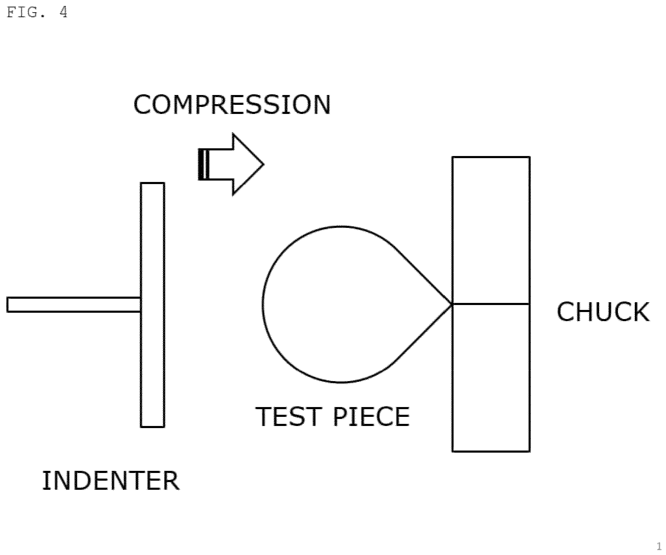

More specifically, with reference to Fig. 4, a film cut into a strip shape having a predetermined dimension is used as a test piece, the test piece is sandwiched and fixed by a chuck so as to form a loop, the loop is compressed at a predetermined speed or the like by an indenter in a loop part of the test piece, and at that time, a repulsive force to the indenter is measured, and the repulsive force is defined as loop stiffness.

The larger the value of the loop stiffness, the higher the rigidity of the film, and the smaller the value, the lower the rigidity of the film. For example, in the case of use in agricultural house applications or the like, the handling properties and the fitting at the time of opening and closing can be easily achieved.

When the laminated film of the present invention is applied to, for example, a film for protected horticulture, visible light serving as a driving source for photosynthesis can be sufficiently supplied to plants. Furthermore, since the laminated film of the present invention has high total light transmittance, it is considered that the growth of plants can be sufficiently promoted.

In addition, with the above configuration, for example, when the laminated film of the present invention is applied to a film for protected horticulture, heat rays which would otherwise increase the temperature in an agricultural house can be sufficiently shielded. Furthermore, since heat generation as caused by a heat-ray absorbing film is small through the film itself, it is possible to suppress an increase in the temperature in the agricultural house and to reduce the cost required for dehumidifying and cooling. In addition, since the film is excellent in handling properties such as fitting and folding properties of the film, the film is particularly suitable as, for example, a film for protected horticulture used for applications having an opening/closing part, a folding part, and the like.

<Second aspect of invention>

The laminated film of the present invention includes the multilayer laminated film, and has the following optical characteristics:
at an incident angle of 0°, an average transmittance of 80% or more at a wavelength of 430 nm or more and 680 nm or less and an average reflectance of less than 70% at a wavelength of 800 nm or more and 1100 nm or less.

In the present invention, the spectral transmittance refers to a value obtained by measurement with a spectrophotometer. The spectral transmittance at a wavelength of 300 to 1,800 nm was measured at intervals of 2 nm to measure the spectral transmittance at each wavelength. Then, the average transmittance in each wavelength range was calculated. The measurement is performed at 25°C in an atmosphere of the air, and the incident angle of the measurement light is set to 0° or 30°.

The laminated film of the present invention is designed to have optical characteristics of an average transmittance of 80% or more at a wavelength of 430 nm or more and 680 nm or less and an average reflectance of less than 70% at a wavelength of 800 to 1100 nm at an incident angle of 0° from the viewpoint of obtaining high total light transmittance in a wavelength range useful for the growth of plants while having a heat ray reflection function.

The average transmittance at a wavelength of 430 nm or more and 680 nm or less at an incident angle of 0° may be, for example, 81% or more, 82% or more, 83% or more, 84% or more, 85% or more, 86% or more, or 87% or more according to the purpose of use or application.

The average reflectance at a wavelength of 800 nm or more and 1100 nm or less at an incident angle of 0° may be, for example, 69% or less, 68% or less, 67% or less, 66% or less, 65% or less, 60% or less, 55% or less, or 50% or less according to the purpose of use or application. Although the solar altitude varies depending on the latitude and the season, it is more effective to design the film surface in consideration of the incident angle of sunlight of 30° in light transmission and the heat shielding effect contributing to photosynthesis when considering the heat shielding material effect particularly in the hot season from the spring to the fall in the hot district to the south of Tokyo in Japan. Therefore, with the above configuration, it is possible to effectively prevent the influence of the secondary reflection peak in the coherent multilayer laminated film on the decrease in photosynthesis due to the appearance in the visible light region.

Further, the laminated film preferably has the following optical characteristics:
at an incident angle of 30°, an average transmittance at a wavelength of 450 ± 20 nm is 80% or more, an average transmittance at a wavelength of 660 ± 20 nm is 70% or more, and an average reflectance at a wavelength of 700 to 900 nm is 70% or more.

The average transmittance at a wavelength of 450 ± 20 nm at an incident angle of 30° may be, for example, 81% or more, 82% or more, 83% or more, 84% or more, 85% or more, 86% or more, 87% or more, 88% or more, or 89% or more according to the purpose of use or application. With the above configuration, light transmission necessary for photosynthesis of plants can be obtained, which is effective.

The average transmittance at a wavelength of 660 ± 20 nm at an incident angle of 30° may be, for example, 71% or more, 72% or more, 73% or more, 74% or more, 75% or more, 76% or more, 77% or more, 78% or more, 79% or more, 80% or more, or 81% or more according to the purpose of use or application. With the above configuration, light transmission necessary for photosynthesis of plants can be obtained, which is effective.

The average reflectance at a wavelength of 700 nm or more and 900 nm or less at an incident angle of 30° may be, for example, 81% or more, 82% or more, 83% or more, 84% or more, 85% or more, 86% or more, 87% or more, 88% or more, 89% or more, 90% or more, 91% or more, 92% or more, 93% or more, 94% or more, 95% or more, 96% or more, 97% or more, or 98% or more, according to the purpose of use or application. With the above configuration, light transmission necessary for photosynthesis of plants can be obtained, which is effective.

Further, the laminated film preferably has the following optical characteristics:
at an incident angle of 0°, an average transmittance at a wavelength of 450 ± 20 nm is 80% or more, an average transmittance at a wavelength of 660 ± 20 nm is 70% or more, and an average reflectance at a wavelength of 700 nm or more and 900 nm or less is 70% or more.

The average transmittance at a wavelength of 450 ± 20 nm at an incident angle of 0° may be, for example, 81% or more, 82% or more, 83% or more, 84% or more, 85% or more, 86% or more, 87% or more, 88% or more, or 89% or more according to the purpose of use or application. With the above configuration, light transmission necessary for photosynthesis of plants can be obtained, which is effective.

The average transmittance at a wavelength of 660 ± 20 nm at an incident angle of 0° may be, for example, 71% or more, 72% or more, 73% or more, 74% or more, 75% or more, 76% or more, 77% or more, 78% or more, 79% or more, 80% or more, 81% or more, 82% or more, 83% or more, 84% or more, 85% or more, or 86% or more according to the purpose of use or application. With the above configuration, light transmission necessary for photosynthesis of plants can be obtained, which is effective.

The average reflectance at a wavelength of 700 nm or more and 900 nm or less at an incident angle of 0° may be, for example, 71% or more, 72% or more, 73% or more, 74% or more, 75% or more, 76% or more, 77% or more, 78% or more, 79% or more, 80% or more, 81% or more, 82% or more, 83% or more, 84% or more, 85% or more, 86% or more, 87% or more, 88% or more, 89% or more, 90% or more, 91% or more, or 92% or more according to the purpose of use or application. The above configuration is effective because a heat shielding effect from sunlight can be obtained. In addition, it is possible to effectively prevent the influence of the appearance of the secondary reflection peak in the visible light region on the decrease in photosynthesis.

The ratio of the optical thickness of the laminated film is preferably 0.60 or more and less than 1.0. The lower limit value of the ratio of the optical thickness of the laminated film may be, for example, 0.65 or more, 0.67 or more, 0.70 or more, 0.75 or more, or 0.8 or more, and the upper limit value may be 0.99 or less, 0.98 or less, 0.97 or less, 0.95 or less, 0.93 or less, 0.91 or less, or 0.90 or less according to the purpose of use or application. With the above configuration, it is possible to effectively prevent the influence of the secondary reflection peak in the coherent multilayer laminated film on the decrease in photosynthesis due to the appearance in the visible light region. The optical thickness is the same as that of the multilayer laminated film.

When the laminated film of the present invention is applied to, for example, a film for protected horticulture, visible light serving as a driving source for photosynthesis can be sufficiently supplied to plants. Furthermore, since the laminated film of the present invention has high total light transmittance, it is considered that the growth of plants can be sufficiently promoted.

In addition, with the above configuration, for example, when the laminated film of the present invention is applied to a film for protected horticulture, heat rays which would otherwise increase the temperature in an agricultural house can be sufficiently shielded. Furthermore, since heat generation as caused by a heat-ray absorbing film is small through the film itself, it is possible to suppress an increase in the temperature in the agricultural house and to reduce the cost required for dehumidifying and cooling.

(Other layers)

The laminated film may be appropriately provided with other known films or layers as long as the action and effect of the present invention are not hindered. Examples thereof may include a lubricity-imparting layer and a diffusing layer.

For example, in order to further enhance the lubricity of the laminated film, a lubricity-imparting layer having a function of imparting lubricity can be appropriately provided. In this case, the lubricity-imparting layer can be provided on at least one surface, preferably both surfaces of the laminated film.

The lubricity-imparting layer can be formed by applying a resin layer containing fine particles having an average particle diameter of 0.05 μm or more and 0.5 μm or less and a lubricant such as wax, or laminating the resin layer by co-extrusion to a multilayer laminated structure.

When the average particle diameter of the fine particles is less than 1.0 μm, slipperiness of the film tends to be insufficient depending on the particle amount, whereas when the average particle diameter is more than 10 μm, the particles will unfavorably fall off from the coating film.

Examples of the fine particles include organic fine particles such as polystyrene, polymethyl methacrylate, a methyl methacrylate copolymer, a methyl methacrylate copolymer crosslinked product, polytetrafluoroethylene, polyvinylidene fluoride, polyacrylonitrile, a benzoguanamine resin, and core shell type particles in which an outer shell of polystyrene particles is covered with an acrylic resin, and inorganic fine particles such as silica, alumina, titanium dioxide, kaolin, talc, graphite, calcium carbonate, feldspar, molybdenum disulfide, carbon black, and barium sulfate. Among them, organic fine particles are preferable.

[Application of laminated film]

The laminated film of the present invention can be suitably used, for example, in the field of institutional horticulture, in particular, in covers, curtains and the like of outdoor facilities such as agricultural houses utilizing sunlight (for example, in the first aspect of the present invention, particularly, applications including an opening/closing part, a folding part, and the like).

In the laminated film of the present invention, the laminated film can be used as it is, or the laminated film can be appropriately processed for use. Specific examples of using the film as it is may include a form in which a laminated film is attached to an object (for example, a window material such as glass). Specific examples of processing of the laminated film for use may include a form of using the laminated film as a woven/knitted fabric described below.

[Method for producing laminated film]

A detailed description is made of a method for producing a laminated film according to an embodiment of the present invention. Note that the manufacturing method described below is an example, and the present invention is not limited thereto. In addition, different aspects can also be obtained with reference to the following.

The laminated film of the present invention includes the multilayer laminated film and has the above optical characteristics.

Therefore, first, a method for producing a multilayer laminated film will be described by taking as an example a case where the multilayer laminated film has a multilayer laminated structure in which at least two types of resin layers having different refractive indexes are alternately laminated.

The multilayer laminated structure according to an embodiment of the present invention can be obtained by alternately superposing a polymer composing a first layer and a polymer composing a second layer in a molten state using a multilayer feed block device to create, for example, an alternately laminated structure of 99 or more layers in total, and providing on both sides thereof protective layers.

The multilayer laminated structure may be laminated such that the thickness of each layer of the first layer and the second layer has a desired inclined structure. This is obtained by, for example, changing the interval and length of the slits in the multilayer feed block device. This makes it possible to widely reflect light having a wavelength of 700 nm or more and 900 nm or less.

After lamination to a desired number of laminations by the above-described method, the laminate is extruded from the die and then cooled on a casting drum to produce a multilayer unstretched film. The multilayer unstretched film is preferably stretched in at least one axial direction (the one axial direction is a direction along the film surface) of an axial direction of a film forming machine (sometimes referred to as a machine direction, a machine direction or MD) or a direction orthogonal thereto in a film plane (sometimes referred to as a transverse direction, a transverse direction, or TD). From the viewpoint of improving the mechanical properties, it is more preferable to stretch the film biaxially in the machine direction and the transverse direction. The stretching temperature is preferably in the range of the glass transition temperature (Tg) to (Tg + 20) °C of the polymer of the first layer. By performing stretching at a temperature lower than the conventional temperature, the orientation characteristics of the film can be more highly controlled.

The stretch ratio is preferably 2.0 to 6.5 times, more preferably 3.0 to 5.5 times in both the machine direction and the transverse direction. It is preferable that the larger the stretch ratio be within the above range, because the smaller the variation in refractive index in the plane direction of the individual layers in the first layer and the second layer due to the thinning caused by stretching, the more uniform the light interference of the multilayer laminated structure in the plane direction, and also the larger the difference in refractive index between the first layer and the second layer in the stretching direction. As a stretching method, either uniaxial stretching only in the machine direction or the transverse direction, sequential biaxial stretching in which stretching in the machine direction and stretching in the transverse direction are separately performed, or simultaneous biaxial stretching in which stretching in the machine direction and stretching in the transverse direction are simultaneously performed can be applied. As each stretching method in the machine direction and the transverse direction, a known stretching method such as heating and stretching with a rod-like heater, roll heating and stretching, or tenter stretching can be used, but tenter stretching is preferable from the viewpoint of reduction of scratches due to contact with a roll, stretching speed, and the like.

In addition, by performing toe-in (relaxation) of the film in the stretching direction within a range of 1 to 15% while further performing heat fixation at a temperature of (Tg) to (Tg + 30)°C after stretching, the thermal stability (for example, heat shrinkage rate) of the obtained multilayer laminated structure can be highly controlled.

Next, a description is made of a method for forming the surface functional layer.

The surface functional layer is provided on at least one surface of the multilayer laminated film, and may be provided directly on the multilayer laminated film or may be provided via another layer.

The formation of the surface functional layer is not particularly limited, but may be performed by, for example, a coating method, a spin coating method, or a transfer method. Among them, the weather-resistant layer is preferably formed by coating.

Specifically, a known coating technique such as a bar coating method, a roll coating method, a knife edge coating method, a gravure coating method, or a curtain coating method can be used as a method for coating and forming the surface functional layer on the surface of the multilayer laminated film. In addition, before the surface functional layer is applied, the multilayer laminated film may be subjected to a surface treatment (flame treatment, corona treatment, plasma treatment, ultraviolet treatment, and the like). The coating liquid used in coating is obtained by dispersing the above-described particles and resin, and may be an aqueous dispersion or a dispersion dispersed with an organic solvent.

When the surface functional layer is formed by coating, the coating to the multilayer laminated film (for example, the multilayer laminated structure) can be performed at any stage, but is preferably performed after the process of producing the multilayer laminated structure.

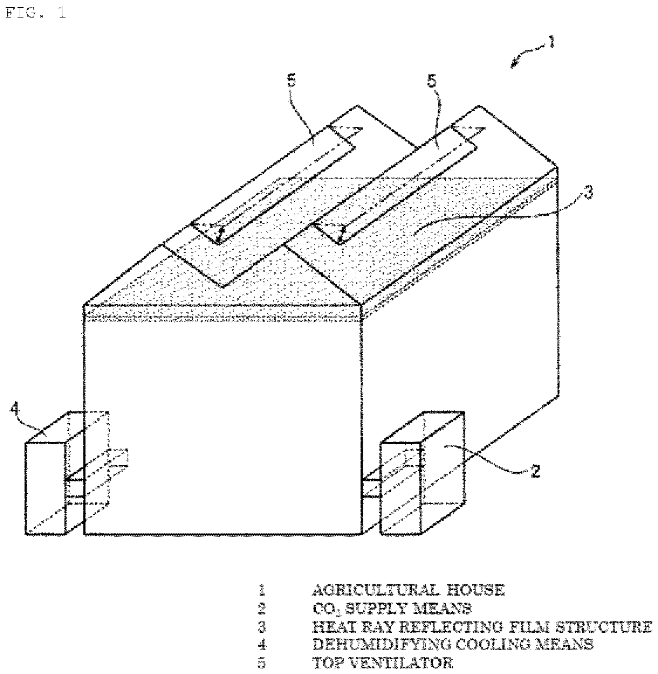

Fig. 1 is a schematic view showing an example of an agricultural house provided with the laminated film of the present invention. This is an example in which the laminated film 3 of the present invention is stretched over an upper part of the agricultural house 1 using sunlight, and a $CO_2$ supply means 2 that supplies carbon dioxide to the inside of the agricultural house 1, which is an arbitrary means, and a dehumidifying cooling means 4 that cools the inside of the agricultural house 1 are provided in a lower part. In the agricultural house 1, for example, the top ventilator 5 can be closed to maintain the carbon dioxide concentration in the agricultural house at a high concentration economically during the day, and the top ventilator 5 can be opened to lower the temperature in the agricultural house at night.

<Woven/knitted fabric>

The woven/knitted fabric of the present invention includes a thin belt-shaped tape cut from the laminated film.

For example, in the first aspect of the present invention, since the woven/knitted fabric of the present invention has the above-described configuration, the woven/knitted fabric is excellent in heat shielding properties without blocking the growth of plants, and is particularly excellent in handling properties such as fitting and folding of a film. Therefore, among them, for example, it is particularly suitable as a woven/knitted fabric used for applications including an opening/closing part, a folding part, and the like.

The woven/knitted fabric only needs to be a thin belt-shaped tape cut from the laminated film. In other words, it may be composed only of the thin belt-shaped tape, or may be provided with another known tape or layer.

The woven/knitted fabric is, for example, a flat or warp knitted fabric obtained by using the thin belt-shaped tape. As another example, the woven/knitted fabric is a warp knitted fabric obtained by using the thin belt-shaped tape as an inserting yarn.

The woven/knitted fabric may be, for example, a woven/knitted fabric in which the thin belt-shaped tape cut from the laminated film is used as a warp yarn or a weft yarn, and a filament yarn or the like is used as a weft or a warp.

The woven/knitted fabric can improve the mechanical strength such as winding property, blocking resistance, tear resistance, and durability of the laminated film, as compared with, for example, the case of using a single film of only the heat-ray reflection layer.

Furthermore, in the woven/knitted fabric, air permeability can be secured by openings formed between the thin belt-shaped tapes, the filament yarns, and the like. As described above, since the woven/knitted fabric is generally excellent in air permeability as compared with a case where the laminated film is used as it is alone, so that dew formation on the lower surface of the film, and therefore formation of water droplets which would otherwise hit plants can be prevented when the temperature difference between the cultivation section and the ceiling section increases at night, particularly in the morning. As a result, occurrence of discoloration or deterioration of fruits, leaves, flowers, and the like of plants can be prevented.

In the woven/knitted fabric, since openings are formed, it is possible to avoid excessively shielding ultraviolet light. Avoiding excessive shielding of ultraviolet light may be effective, for example, in improving coloring during growth of fruits such as eggplant and in supporting normal pollinating activities performed by bees in agricultural houses.

In addition, in the woven/knitted fabric, the thickness of the filament yarn or the like may be 0.01 to 0.30 times the width of the thin belt-shaped tape, and the interval between the adjacent thin belt-shaped tapes may be 0.1 to 0.5 times the width of the thin belt-shaped tape. In the present invention, the "filament yarn or the like" refers to a filament yarn or a spun yarn. As the filament yarn, either a monofilament yarn or a multifilament yarn may be used, but the filament yarn is not particularly limited.

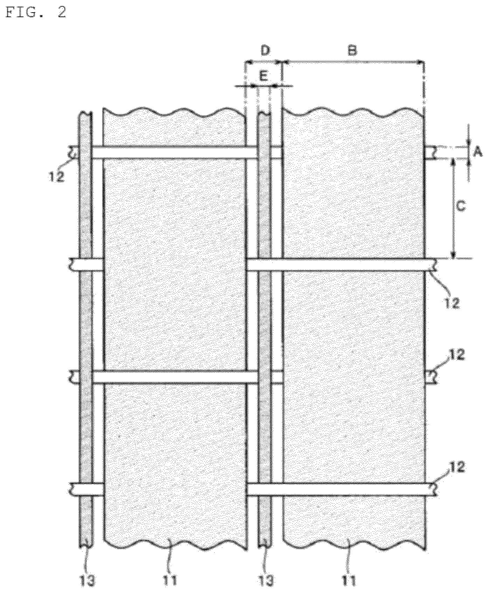

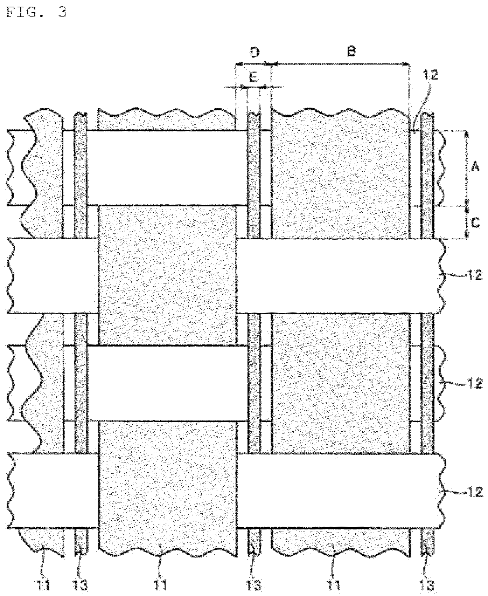

As shown in Figs. 2 and 3, a thin belt-shaped tape (warp yarn) 11 obtained by cutting (slitting) a laminated film into a thin belt-shaped is woven with filament yarns or the like (weft yarns) 12, for example. By setting the thickness A of the filament yarn or the like (weft yarn) 12, the width B of the thin belt-shaped tape (warp yarn) 11, the interval C between the adjacent filament yarns or the like (weft yarns) 12, and the interval D between the adjacent thin belt-shaped tapes (warp yarns) 11 to be in specific ranges, the porosity of the woven/knitted fabric is set to be in an appropriate range, and the ultraviolet transmittance is set to be in an appropriate range while ensuring a high total light transmittance and a heat ray reflectance that are not inferior to those in a case where the laminated film is used alone. For firm weaving, filament yarns or the like (warp yarns) 13 having a thickness E are interposed as warp yarns between the adjacent thin belt-shaped tapes (warp yarns) 11.

More specifically, in the woven/knitted fabric, by setting the thickness of the filament yarn or the like (weft yarn) 12 to 0.01 to 0.30 times the width of the thin belt-shaped tape (warp yarn) 11, and setting the interval between the adjacent thin belt-shaped tapes (warp yarns) 11 to 0.1 to 0.5 times the width of the thin belt-shaped tape (warp yarn) 11, the porosity can be set within an appropriate range, and the ultraviolet transmittance can be set within an appropriate range while ensuring a high total light transmittance and heat ray reflectance that are not inferior to those in a case where the laminated film is used alone. An interval between adjacent filament yarns or the like (weft yarns) 12 is preferably in a range of 1.0 mm or more and 10 mm or less.

The width of the thin belt-shaped tape (warp yarn) 11 is preferably 1 mm or more and 10 mm or less, more preferably 2 mm or more and 6 mm or less, still more preferably 3 mm or more and 5 mm or less. The interval between the thin belt-shaped tapes (warp yarn) 11, that is, the distance between the end sides of the adjacent thin belt-shaped tapes (warp yarn) 11 is preferably 0.2 mm or more and 1.0 mm or less, more preferably 0.4 mm or more and 0.8 mm or less, still more preferably 0.5 mm or more and 0.7 mm or less. The thickness of the filament yarn or the like (weft yarn) 12 is preferably 0.05 mm or more and 0.35 mm or less, more preferably 0.1 mm or more and 0.3 mm or less, still more preferably 0.15 mm or more and 0.25 mm or less. In the woven/knitted fabric of the present invention, by setting the width of the thin belt-shaped tape of the woven/knitted fabric, the thickness of the filament yarn or the like, the interval between the adjacent filament yarns or the like, and the interval between the adjacent thin belt-shaped tapes as described above, the porosity can be set to an appropriate range, and the ultraviolet transmittance can be set to an appropriate range while ensuring a high total light transmittance and a heat ray reflectance that are not inferior to those in a case where the laminated film is used alone.

The porosity of the woven/knitted fabric formed from the laminated film is preferably 10% or more and 30% or less. The "porosity" in the present invention is determined by the following formula: [S (cm$^2$) /100 (cm$^2$)] $\times$ 100, in which when a square part of 10 cm in length and width (area: 100 cm$^2$) on one surface of the woven/knitted fabric is observed from the direction perpendicular to the surface, a part through which the back surface side is visible with no blockage is defined as a hole, and the sum (S cm$^2$) of the areas of the holes (referred to as hole areas) is determined.

In the woven/knitted fabric of the present invention, when the porosity is 10% or more, the air permeability of the woven/knitted fabric can be improved. When a top ventilator provided on the ceiling is opened at night when photosynthesis is not performed to lower the temperature in an agricultural house in preparation for temperature rise in the daytime of the next day, the air heated in the daytime in the lower part of the agricultural house can be released to the outside through the woven/knitted fabric. In addition, even when the air in the upper part close to the roof is cooled at night, particularly in the morning, the woven/knitted fabric of the present invention is preferable because dew formation on the lower surface of the woven/knitted fabric, and therefore formation of water droplets which would otherwise hit plants to cause deterioration in quality such as discoloration and deterioration of fruits, leaves, flowers, and the like of the plants, and which would otherwise cause deterioration in the woven/knitted fabric itself can be prevented. When the porosity is 30% or less, the woven or knitted fabric of the present invention is preferable because a high total light transmittance and a high heat ray reflectance provided by the laminated film can be secured.

<Film for protected horticulture>

The film for protected horticulture of the present invention includes the laminated film.

The film for protected horticulture only needs to be a film that contains the laminated film. In other words, it may be composed only of the laminated film, or may be provided with another known film, layers, and the like.

For example, in the first aspect of the present invention, since the film for protected horticulture of the present invention has the above-described configuration, the woven/knitted fabric is excellent in heat shielding properties without blocking the growth of plants, and is particularly excellent in handling properties such as fitting and folding of a film. Therefore, among them, for example, it is particularly suitable as a film for protected horticulture used for applications including an opening/closing part, a folding part, and the like.

EXAMPLES

Hereinafter, a specific description is made of the present invention with reference to Examples, but the present invention is not limited to the following Examples. Physical properties and characteristics in Examples were measured or evaluated by the following methods. The word "part" refers to "part by mass".

In addition, each measurement, evaluation, and the like in Examples were performed as follows.

(1) Total thickness of film and thickness of each layer

For the total thickness of film, a film sample was nipped in a spindle detector (K107C manufactured by Anritsu Corporation), and the thickness was measured at 10 points at different positions with a digital differential electron micrometer (K351 manufactured by Adachi Electric Co., Ltd.) to calculate an average value as the total thickness of film.

For the thickness of each layer of the film, the laminated film was cut out into a size of 2 mm in the film machine direction and 2 cm in the transverse direction, fixed in an embedding capsule, and then embedded in an epoxy resin (EPOMOUNT manufactured by Refine Tech Ltd.). The embedded sample was cut vertically in the transverse direction with a microtome (ULTRACUT UCT manufactured by LEICA) to provide a thin film section having a thickness of 5 nm. The section was observed and photographed at an acceleration voltage of 100 kV using a transmission electron microscope (Hitachi, Ltd., S-4300), and the thickness (physical thickness) of each layer was measured from the photograph.

For a layer having a thickness of more than 1 $\mu$m, a layer present inside the multilayer structure was defined as an intermediate layer, and a layer present on the outermost layer was defined as an outermost layer, and the thickness of each layer was measured.

Note that whether the layer is the first layer or the second layer can be determined by the aspect of the refractive index, but when it is difficult to do so, it can be determined based on an electronic state by analysis using NMR or analysis using TEM. The refractive index of each layer can also be determined from a single layer film having the same composition as that of each layer but having a larger thickness.

(2) Spectral transmittance

As the spectral transmittance, the spectral transmittance at a wavelength of 300 nm or more and 1800 nm or less was measured at intervals of 2 nm using a spectrophotometer (MPC-3100 manufactured by Shimadzu Corporation). A spectral spectrum of the obtained laminated film was obtained, and the spectral transmittance at each wavelength was measured. Then, the average transmittance in each wavelength range in Examples was calculated.

The measurement was performed at 25°C in an atmosphere of the air, and the incident angle of the measurement light was set to 0° or 30°.

(3) Spectral reflectance

Using a spectrophotometer (MPC-3100 manufactured by Shimadzu Corporation), the reflectivity of a $BaSO_4$ white plate at 100% was measured over a wavelength range of 300 nm to 1800 nm. A spectral spectrum of the obtained film was obtained, and an average reflectance in each wavelength range was obtained.

(4) Refractive index

The refractive index of the polyester composing the first layer and the second layer was determined by measuring at a wavelength of 633 nm using a prism coupler manufactured by Metricon Corporation. The refractive index of each layer was measured by peeling the film interface so that the layer was exposed to the surface.

(5) Loop stiffness

As a sample for loop stiffness measurement, each of the laminated films produced in Examples and Comparative Examples was cut out as a strip-shaped film having a width of 25.4 mm and a length of 130 mm. At this time, the machine direction of the strip-shaped film was made to coincide with the direction of the measurement target.

The cut strip-shaped film was set in a loop tester (manufactured by Toyo Seiki Seisaku-sho, Ltd.), and the repulsive force due to the loop-shaped crushing resistance at a distance between chucks of 50 mm and a compression speed of 3.3 mm/sec was measured (see Fig. 4). The value obtained by dividing the maximum value of the repulsive force obtained by the measurement by the width length was taken as the loop stiffness (mN/cm).

The loop stiffness refers to a repulsive force of a loop measured in a state where a loop is formed using a film cut into a strip shape having a predetermined dimension and this loop is crushed by a predetermined amount in the radial direction, and is an index representing the rigidity of the film. The larger the value of loop stiffness, the higher the rigidity of the film, and the smaller the value, the lower the rigidity of the film. For example, in the case of use in agricultural house applications or the like, handling properties or fitting at the time of opening and closing can be easily achieved.

Using each of the above samples, rigidity evaluation by loop stiffness was performed, and the effect of handling properties was evaluated according to the following criteria.

⊝: Less than 45.0 mN/cm (good effect due to low rigidity)
○: 45.0 mN/cm or more and less than 50.0 mN/cm (effect due to low rigidity is slightly good)
△: 50.0 mN/cm or more

<First aspect of invention>

[Example 1]

[Preparation of multilayer laminated polyester film]

Polyethylene-2,6-naphthalate (hereinafter, referred to as "PEN") having an intrinsic viscosity (ortho-chlorophenol, 35°C) of 0.62 dl/g was prepared as a polyester for the first layer and the protective layer, and cyclohexanedimethanol copolymerized polyethylene terephthalate (hereinafter, referred to as "PETG") having an intrinsic viscosity (ortho-chlorophenol, 35°C) of 0.77 dl/g obtained by copolymerizing 30 mol% of cyclohexanedimethanol was prepared as a polyester for the second layer.

The polyester for the first layer and for the protective layer was dried at 180°C for 5 hours and then supplied to an extruder, and the PEN of the first layer was brought into a molten state at 290°C. The PETG of the second layer was dried at 120°C for 10 hours, then supplied to an extruder, and heated to 230°C to be brought into a molten state.

Thereafter, after the PEN of the first layer was branched into 137 layers and the PETG of the second layer was branched into 138 layers, the PEN layer of the first layer and the PETG layer of the second layer were alternately laminated, and a protective layer was laminated on both surfaces of a laminated structure part in which the ratio of the maximum layer thickness to the minimum layer thickness in each of the first layer and the second layer continuously changed to 1.4 times at the maximum/minimum using a multilayer feed block device, and the resultant was guided to a die while maintaining the laminated state, and cast on a casting drum. Then, an unstretched multilayer laminated film having the protective layer composed of the PEN layer on the outermost layers of both surfaces of the film and having 275 layers in total in the laminated structure part was created. The amount of the protective layer supplied was adjusted such that the thickness after stretching was as shown in Table 1. In addition, the discharge amounts of the resins of the first layer and the second layer were adjusted such that the optical thickness ratios of the first layer and the second layer of the laminated structure part excluding the protective layer were equal.

The unstretched film obtained as described above was preheated at 120°C, and further heated from above with an IR heater at 900°C between rolls at a low speed and a high speed by 15 mm to stretch the film 3.5 times in the machine direction. Subsequently, the film was supplied to a tenter and stretched 4.5 times in the transverse direction at 140°C. The obtained biaxially oriented film was heat-fixed at a temperature of 190°C for 30 seconds, and then subjected to 1.5% toe-in (relaxation) in the transverse direction. The in-plane average refractive index after film formation with the resin of the first layer was 1.760. The in-plane average refractive index after film formation with the resin for the second layer was 1.580.

The obtained multilayer laminated polyester film had a total thickness of 50 $\mu$m, the multilayer laminated part had a thickness of 35 $\mu$m, and the total thickness was set to 50 $\mu$m by providing the protective layers on the front surface and the back surface each having a thickness of 7.5 $\mu$m. Here, the front surface is on the casting roll side (front surface), and the back surface is on the opposite side (back surface), and the thicknesses of the protective layers on the front surface and the back surface are the same as each other unless otherwise specified. These thicknesses can be adjusted by adjusting the supply amount, the discharge amounts of the first and second layers, and the channel diameter.

The transmittance of the obtained multilayer laminated polyester film at an incident angle of 0° at a wavelength of 700 nm was 76.5%, and the transmittances at the other wavelengths are shown in Table 1. In addition, the layer configuration, the film formation conditions, and the obtained film properties are shown in Table 1.

[Examples 2 to 13, Comparative Example 1]

The same operation as in Example 1 was repeated except that the thickness of the protective layer, the thickness of the multilayer laminated part, and the ratio of the optical thickness was adjusted to be as described in Table 1. The obtained film was evaluated in the same manner as in Example 1.

The formulation and the results are shown in Table 1 below.

[Table 1]

| | | Incident angle | Example 1 | Example 2 | Example 3 | Example 4 | Example 5 | Example 6 | Example 7 | Example 8 | Example 9 | Example 10 | Example 11 | Example 12 | Example 13 | Comparative Example 1 |
|---|---|---|---|---|---|---|---|---|---|---|---|---|---|---|---|---|
| Spectroscopic characteristics | λ 450 ± 20 nm average transmittance | @ 30° | 88.8 | 87.9 | 86.5 | 87.0 | 84.4 | 84.7 | 88.7 | 80.3 | 85.4 | 87.3 | 89.2 | 91.0 | 90.2 | 87.5 |
| | λ 550 ± 20 nm average transmittance | @ 30° | 80.4 | 80.5 | 77.7 | 80.1 | 75.1 | 71.7 | 70.2 | 79.2 | 80.3 | 75.1 | 82.2 | 85.6 | 12.7 | 87.0 |
| | λ 700 to 900 nm average reflectance | @ 30° | 88.5 | 91.7 | 79.3 | 86.5 | 82.2 | 82.6 | 73.2 | 74.3 | 75.2 | 87.2 | 83.3 | 26.7 | 64.8 | 80.0 |
| | λ 700 transmittance | @ 30° | 40.2 | 37.4 | 62.1 | 59.1 | 60.3 | 25.4 | 22.3 | 67.8 | 65.2 | 31.4 | 50.3 | 91.3 | 4.3 | 82.5 |
| | λ 430 to 680 nm average transmittance | @ 30° | 86.4 | 85.2 | 83.9 | 85.3 | 82.0 | 81.9 | 81.2 | 81.5 | 84.6 | 83.5 | 87.5 | 87.4 | 71.4 | 87.6 |
| | λ 450 ± 20 nm average transmittance | @ 0° | 89.5 | 83.4 | 85.3 | 87.0 | 83.2 | 83.0 | 87.6 | 79.1 | 85.2 | 80.1 | 90.0 | 92.1 | 87.5 | 88.1 |
| | λ 550 ± 20 nm average transmittance | @ 0° | 82.5 | 82.9 | 80.1 | 82.6 | 78.7 | 80.1 | 73.1 | 82.3 | 82.3 | 78.9 | 84.4 | 87.6 | 53.3 | 87.8 |
| Spectroscopic characteristics | λ 700 to 900 nm average reflectance | @ 0° | 91.7 | 93.9 | 83.9 | 92.5 | 88.5 | 91.8 | 79.8 | 80.5 | 91.3 | 90.3 | 89.3 | 16.5 | 82.0 | 84.5 |
| | λ 700 transmittance | @ 0° | 46.0 | 70.6 | 67.1 | 54.4 | 46.6 | 44.5 | 27.4 | 69.3 | 69.3 | 36.7 | 56.2 | 96.1 | 1.4 | 93.3 |
| | λ 800 to 1100 nm average reflectance | @ 0° | 58.3 | 53.7 | 55.5 | 59.3 | 65.5 | 41.7 | 25.5 | 63.2 | 66.6 | 30.3 | 54.2 | 73.2 | 27.9 | 85.5 |
| | λ 430 to 680 nm average transmittance | @ 0° | 86.2 | 85.5 | 82.8 | 84.9 | 81.0 | 83.8 | 90.8 | 90.8 | 84.5 | 84.9 | 86.9 | 87.9 | 74.2 | 88.1 |
| | Ratio of optical thickness | | 0.89 | 0.92 | 0.75 | 0.85 | 0.67 | 0.67 | 0.54 | 0.54 | 0.96 | 0.82 | 0.82 | 0.82 | 0.79 | 1.00 |
| Evaluation | Loop stiffness | mN/cm | 46.2 | 47.5 | 40.9 | 45.2 | 36.3 | 36.7 | 30.1 | 29.5 | 48.6 | 44.7 | 43.7 | 41.0 | 46.1 | 51.0 |
| | Handling properties | - | ○ | ○ | ○ | ○ | ◎ | ◎ | ◎ | ◎ | ○ | ◎ | ◎ | ◎ | ○ | △ |
| Thickness | thickness of laminated part | μm | 36.0 | 35.2 | 34.5 | 34.5 | 34.5 | 34.0 | 32.5 | 33.5 | 35.5 | 33.5 | 34.5 | 41.0 | 35.0 | 37.7 |
| | Protective layer front surface | μm | 7.5 | 7.4 | 7.8 | 7.8 | 7.8 | 8.0 | 8.0 | 8.3 | 7.3 | 8.3 | 7.8 | 4.5 | 7.8 | 7.8 |
| | Protective layer Back surface | μm | 7.5 | 7.4 | 7.8 | 7.8 | 7.8 | 8.0 | 8.0 | 8.3 | 7.3 | 8.3 | 7.8 | 4.5 | 7.5 | 7.8 |
| | Film thickness | μm | 50.0 | 50.0 | 50.0 | 50.0 | 50.0 | 50.0 | 50.0 | 50.0 | 50.0 | 50.0 | 50.0 | 50.0 | 50.0 | 50.0 |

As can be seen from Table 1, it was found that the laminated film of Examples of the present invention has high visible range transmission performance, can effectively cut a near ultraviolet region having high sunlight heat energy without blocking the growth of plants, is excellent in heat shielding properties, and is excellent in handling properties, as compared with the film of Comparative Example.

<Second aspect of invention>

[Example 1]

[Preparation of multilayer laminated polyester film]

Polyethylene-2,6-naphthalate (hereinafter, referred to as "PEN") having an intrinsic viscosity (ortho-chlorophenol, 35°C) of 0.62 dl/g was prepared as a polyester for the first layer and the protective layer, and cyclohexanedimethanol copolymerized polyethylene terephthalate (hereinafter, referred to as "PETG") having an intrinsic viscosity (ortho-chlorophenol, 35°C) of 0.77 dl/g obtained by copolymerizing 30 mol% of cyclohexanedimethanol was prepared as a polyester for the second layer.

The polyester for the first layer and for the protective layer was dried at 180°C for 5 hours and then supplied to an extruder, and the PEN of the first layer was brought into a molten state at 290°C. The PETG of the second layer was dried at 120°C for 10 hours, then supplied to an extruder, and heated to 230°C to be brought into a molten state.

Thereafter, after the PEN of the first layer was branched into 137 layers and the PETG of the second layer was branched into 138 layers, the PEN layer of the first layer and the PETG layer of the second layer were alternately laminated, and a protective layer was laminated on both surfaces of a laminated structure part in which the ratio of the maximum layer thickness to the minimum layer thickness in each of the first layer and the second layer continuously changed to 1.4 times at the maximum/minimum using a multilayer feed block device, and the resultant was guided to a die while maintaining the laminated state, and cast on a casting drum. Then, an unstretched multilayer laminated film having the protective layer composed of the PEN layer on the outermost layers of both surfaces of the film and having 275 layers in total in the laminated structure part was created. The amount of the protective layer supplied was adjusted such that the thickness after stretching was as shown in Table 1. In addition, the discharge amounts of the resins of the first layer and the second layer were adjusted such that the optical thickness ratios of the first layer and the second layer of the laminated structure part excluding the protective layer were equal.

The unstretched film obtained as described above was preheated at 120°C, and further heated from above with an IR heater at 900°C between rolls at a low speed and a high speed by 15 mm to stretch the film 3.5 times in the machine direction. Subsequently, the film was supplied to a tenter and stretched 4.5 times in the transverse direction at 140°C. The obtained biaxially oriented film was heat-fixed at a temperature of 190°C for 30 seconds, and then subjected to 1.5% toe-in (relaxation) in the transverse direction.

The obtained multilayer laminated polyester film had a total thickness of 50 $\mu$m, the multilayer laminated part had a thickness of 35 $\mu$m, and the total thickness was set to 50 $\mu$m by providing the protective layers on the front surface and the back surface each having a thickness of 7.5 $\mu$m. Here, the front surface is on the casting roll side (front surface), and the back surface is on the opposite side (back surface), and the thicknesses of the protective layers on the front surface and the back surface are the same as each other unless otherwise specified. These thicknesses can be adjusted by adjusting the supply amount, the discharge amounts of the first and second layers, and the channel diameter.

The transmittance of the obtained multilayer laminated polyester film at an incident angle of 0° at a wavelength of 700 nm was 76.5%, and the transmittances at the other wavelengths are shown in Table 2. In addition, the layer configuration, the film formation conditions, and the obtained film properties are shown in Table 2.

[Examples 2 to 11, Comparative Example 1]

The same operation as in Example 1 was repeated except that the thickness of the protective layer, the thickness of the multilayer laminated part, and the ratio of the optical thickness was adjusted to be as described in Table 2. The obtained film was evaluated in the same manner as in Example 1.

The formulation and the results are shown in Table 2 below.

[Table 2]

| Category | | Incident angle | Example 1 | Example 2 | Example 3 | Example 4 | Example 5 | Example 6 | Example 7 | Example 8 | Example 9 | Example 10 | Example 11 | Comparative Example 1 |
|---|---|---|---|---|---|---|---|---|---|---|---|---|---|---|
| Spectroscopic characteristics | λ 450 ± 20 nm average transmittance | θ 30° | 88.8 | 87.9 | 86.5 | 87.0 | 84.4 | 84.7 | 88.7 | 80.3 | 85.4 | 87.3 | 89.2 | 87.5 |
| | λ 660 ± 20 nm average transmittance | θ 30° | 80.4 | 80.5 | 77.7 | 80.1 | 76.1 | 71.7 | 70.2 | 79.2 | 80.3 | 76.1 | 82.2 | 87.0 |
| | λ 700 to 900 nm average reflectance | θ 30° | 88.5 | 91.7 | 79.3 | 86.5 | 82.2 | 82.8 | 73.2 | 74.3 | 75.2 | 87.2 | 83.3 | 80.0 |
| | λ 700 transmittance | θ 30° | 40.2 | 37.4 | 62.1 | 59.1 | 60.3 | 25.4 | 22.3 | 67.8 | 65.2 | 31.4 | 50.3 | 82.5 |
| | λ 430 to 680 nm average transmittance | θ 30° | 86.4 | 85.2 | 83.9 | 85.3 | 82.0 | 81.9 | 81.2 | 81.5 | 84.6 | 83.5 | 87.5 | 87.6 |
| Spectroscopic characteristics | λ 450 ± 20 nm average transmittance | θ 0° | 89.6 | 83.4 | 85.3 | 87.8 | 83.2 | 83.0 | 87.5 | 79.1 | 86.2 | 88.1 | 90.0 | 88.1 |
| | λ 660 ± 20 nm average transmittance | θ 0° | 82.5 | 82.9 | 80.1 | 82.6 | 78.7 | 80.1 | 73.1 | 82.3 | 82.8 | 78.8 | 84.4 | 87.8 |
| | λ 700 to 900 nm average reflectance | θ 0° | 91.7 | 83.9 | 85.9 | 92.6 | 88.5 | 91.6 | 79.8 | 80.5 | 81.3 | 90.3 | 89.3 | 64.6 |
| | λ 700 transmittance | θ 0° | 46.0 | 78.6 | 67.1 | 64.4 | 65.8 | 44.5 | 27.4 | 69.3 | 69.3 | 36.7 | 56.2 | 88.3 |
| | λ 800 to 1100 nm average reflectance | θ 0° | 58.3 | 53.7 | 55.5 | 59.9 | 65.5 | 41.7 | 25.5 | 63.2 | 66.6 | 30.3 | 54.2 | 86.5 |
| | λ 430 to 680 nm average transmittance | θ 0° | 86.2 | 85.5 | 82.8 | 84.9 | 81.0 | 83.8 | 80.8 | 80.8 | 84.5 | 84.9 | 86.9 | 88.1 |
| | Ratio of optical thickness | | 0.89 | 0.92 | 0.75 | 0.85 | 0.67 | 0.67 | 0.54 | 0.54 | 0.96 | 0.82 | 0.82 | 1.00 |
| Thickness | Thickness of laminated part | um | 35.0 | 35.2 | 34.5 | 34.5 | 34.5 | 34.0 | 32.5 | 33.5 | 35.5 | 33.5 | 34.5 | 37.7 |
| | Protective layer Front surface | um | 7.5 | 7.4 | 7.8 | 7.8 | 7.8 | 8.0 | 8.8 | 8.3 | 7.3 | 8.3 | 7.8 | 6.2 |
| | Protective layer Back surface | um | 7.5 | 7.4 | 7.8 | 7.8 | 7.8 | 8.0 | 8.8 | 8.3 | 7.3 | 8.3 | 7.8 | 6.2 |
| | Film thickness | um | 50.0 | 50.0 | 50.0 | 50.0 | 50.0 | 50.0 | 50.0 | 50.0 | 50.0 | 50.0 | 50.0 | 50.0 |

As can be seen from Table 2, it was found that the laminated film of Examples of the present invention has high visible range transmission performance, can effectively cut a near ultraviolet region having high sunlight heat energy without blocking the growth of plants, and has excellent heat shielding properties as compared with the film of Comparative Examples.

EP 4 588 653 A1

21

**Claims**

1. A laminated film for an agricultural house utilizing sunlight, the laminated film comprising:
   a multilayer laminated film in which at least two kinds of resin layers having different refractive indexes are alternately laminated in a thickness direction, and has the following optical characteristics:

   at an incident angle of 0°, an average transmittance of 70% or more at a wavelength of 430 nm or more and 680 nm or less and an average reflectance of less than 80% at a wavelength of 800 nm or more and 1100 nm or less; and a stiffness of the multilayer laminated film is less than 50.0 mN/cm.

2. The laminated film according to claim 1, wherein
   the laminated film has the following optical characteristics:
   at an incident angle of 30°, an average reflectance of 70% or more at a wavelength of 700 nm or more and 900 nm or less.

3. The laminated film according to claim 1, wherein
   the laminated film has the following optical characteristics:
   at an incident angle of 30°, an average transmittance at a wavelength of 450 ± 20 nm is 80% or more, an average transmittance at a wavelength of 660 ± 20 nm is 70% or more, and an average reflectance at a wavelength of 700 nm or more and 900 nm or less is 70% or more.

4. The laminated film according to claim 1, wherein
   the laminated film has the following optical characteristics:
   at an incident angle of 0°, an average transmittance at a wavelength of 450 ± 20 nm is 80% or more, an average transmittance at a wavelength of 660 ± 20 nm is 70% or more, and an average reflectance at a wavelength of 700 nm or more and 900 nm or less is 70% or more.

5. A laminated film for an agricultural house utilizing sunlight, the laminated film comprising:
   a multilayer laminated film in which at least two kinds of resin layers having different refractive indexes are alternately laminated in a thickness direction, and has the following optical characteristics:
   at an incident angle of 0°, an average transmittance of 80% or more at a wavelength of 430 nm or more and 680 nm or less and an average reflectance of less than 70% at a wavelength of 800 nm or more and 1100 nm or less.

6. The laminated film according to claim 5, wherein
   the laminated film has the following optical characteristics:
   at an incident angle of 30°, an average transmittance at a wavelength of 450 ± 20 nm is 80% or more, an average transmittance at a wavelength of 660 ± 20 nm is 70% or more, and an average reflectance at a wavelength of 700 nm or more and 900 nm or less is 70% or more.

7. The laminated film according to claim 5, wherein
   the laminated film has the following optical characteristics:
   at an incident angle of 0°, an average transmittance at a wavelength of 450 ± 20 nm is 80% or more, an average transmittance at a wavelength of 660 ± 20 nm is 70% or more, and an average reflectance at a wavelength of 700 nm or more and 900 nm or less is 70% or more.

8. The laminated film according to claim 1, wherein the multilayer laminated film has a ratio of an optical thickness of 0.60 or more and less than 1.0.

9. The laminated film according to claim 5, wherein the multilayer laminated film has the ratio of an optical thickness of 0.60 or more and less than 1.0.

10. The laminated film according to claim 1, wherein the laminated film includes an ultraviolet absorbing layer on at least one surface.

11. The laminated film according to claim 5, wherein the laminated film includes an ultraviolet absorbing layer on at least one surface.

12. A woven/knitted fabric comprising a thin belt-shaped tape cut from the laminated film according to any one of claims 1 to 11.

13. A woven/knitted fabric obtained by weaving and knitting a thin belt-shaped tape cut from the laminated film according to any one of claims 1 to 11 as a warp yarn or a weft yarn and a filament yarn or a spun yarn as a warp yarn or a weft yarn.

14. A film for protected horticulture comprising the laminated film according to any one of claims 1 to 11.

FIG. 1

| 1 | AGRICULTURAL HOUSE |
| 2 | $CO_2$ SUPPLY MEANS |
| 3 | HEAT RAY REFLECTING FILM STRUCTURE |
| 4 | DEHUMIDIFYING COOLING MEANS |
| 5 | TOP VENTILATOR |

FIG. 2

FIG. 3

FIG. 4

COMPRESSION

INDENTER

TEST PIECE

CHUCK

## INTERNATIONAL SEARCH REPORT

| International application No. |
| --- |
| **PCT/JP2023/032991** |

| A. | CLASSIFICATION OF SUBJECT MATTER |
| --- | --- |

***B32B 7/023***(2019.01)i; ***A01G 9/14***(2006.01)i; ***B32B 7/022***(2019.01)i; ***B32B 27/00***(2006.01)i; ***D03D 15/283***(2021.01)i;
***D03D 15/292***(2021.01)i; ***D03D 15/46***(2021.01)i; ***D04B 1/16***(2006.01)i; ***D04B 21/16***(2006.01)i; ***G02B 5/20***(2006.01)i;
***G02B 5/22***(2006.01)i; ***G02B 5/28***(2006.01)i
FI:   B32B7/023; A01G9/14 S; B32B7/022; B32B27/00 Z; D03D15/283; D03D15/292; D03D15/46; D04B1/16; D04B21/16;
      G02B5/20; G02B5/22; G02B5/28

According to International Patent Classification (IPC) or to both national classification and IPC

| B. | FIELDS SEARCHED |
| --- | --- |

Minimum documentation searched (classification system followed by classification symbols)

B32B1/00-43/00; A01G9/14-9/26; D03D15/00-15/68; D04B1/00-1/28; D04B21/00-21/20; G02B5/20-5/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2017-153377 A (TEIJIN FILM SOLUTIONS LTD.) 07 September 2017 (2017-09-07) paragraphs [0001], [0004], [0020]-[0034], [0053]-[0058], examples 1-1, 2, fig. 1, 2 | 1-14 |
| Y | JP 2011-107178 A (FUJIFILM CORP.) 02 June 2011 (2011-06-02) abstract, paragraphs [0012]-[0017], [0050], fig. 1 | 1-14 |
| Y | JP 6-198732 A (TORAY IND., INC.) 19 July 1994 (1994-07-19) claims 1-2, 5-6, paragraphs [0001], [0012]-[0014] | 1-14 |
| A | JP 2020-179643 A (TOYOBO FILM SOLUTIONS LTD.) 05 November 2020 (2020-11-05) whole document | 1-14 |
| A | JP 2003-1775 A (TORAY IND., INC.) 08 January 2003 (2003-01-08) whole document | 1-14 |
| A | JP 2009-192708 A (HOYA CORP.) 27 August 2009 (2009-08-27) whole document | 1-14 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 November 2023** | **05 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

28

## INTERNATIONAL SEARCH REPORT

| International application No. |
|---|
| **PCT/JP2023/032991** |

**C.      DOCUMENTS CONSIDERED TO BE RELEVANT**

| Category* | Citation of document, with indication, where appropriate, of the relevant passages | Relevant to claim No. |
|---|---|---|
| A | US 2010/0220389 A1 (NOVOGENIO, S.L.) 02 September 2010 (2010-09-02)<br>whole document | 1-14 |

Form PCT/ISA/210 (second sheet) (January 2015)

**INTERNATIONAL SEARCH REPORT**
Information on patent family members

International application No.

**PCT/JP2023/032991**

| Patent document cited in search report | | | Publication date (day/month/year) | Patent family member(s) | | | Publication date (day/month/year) |
|---|---|---|---|---|---|---|---|
| JP | 2017-153377 | A | 07 September 2017 | US | 2021/0195851 | A1 | |
| | | | | paragraphs [0001], [0005], [0055]-[0093], [0108]-[0113], example 6-1, fig. 1, 3 | | | |
| | | | | WO | 2017/150165 | A1 | |
| | | | | EP | 3424298 | A1 | |
| | | | | CN | 108697053 | A | |
| | | | | KR | 10-2018-0120155 | A | |
| JP | 2011-107178 | A | 02 June 2011 | (Family: none) | | | |
| JP | 6-198732 | A | 19 July 1994 | US | 5747174 | A | |
| | | | | claims, column 1, lines 10-14, column 2, line 20 to column 12, line 15 | | | |
| | | | | WO | 1993/016864 | A1 | |
| | | | | EP | 581970 | A1 | |
| | | | | KR | 10-0261755 | B1 | |
| JP | 2020-179643 | A | 05 November 2020 | (Family: none) | | | |
| JP | 2003-1775 | A | 08 January 2003 | (Family: none) | | | |
| JP | 2009-192708 | A | 27 August 2009 | (Family: none) | | | |
| US | 2010/0220389 | A1 | 02 September 2010 | WO | 2009/053236 | A1 | |
| | | | | CN | 101910884 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5464567 B
- JP 2012206430 A
- JP 6630187 B

**Non-patent literature cited in the description**

- **RADFORD et al.** Reflectivity of Iridescent Co extruded Multilayered Plastic Films. *Polymer Engineering and Science*, May 1973, vol. 13 (3)